# EUROPÄISCHE PATENTSCHRIFT

(11) **EP 1 273 809 B1**
(45) Veröffentlichungstag und Bekanntmachung des Hinweises auf die Patenterteilung: **19.04.2006**
(21) Anmeldenummer: 02010983.1
(22) Anmeldetag: 17.05.2002
(51) Int. Cl.: F16B 5/06, E04B 1/61, H05K 3/32, E04F 11/18

(54) **Klemmvorrichtung zum Befestigen von Platten, insbesondere Glasscheiben, inklusive elektrischer Anschlüsse**
Clamping mean for holding panels, notably of glass, inclusive electrical connections
Fixation par serrage pour panneaux, notamment en verre, connections électriques inclues

(30) Priorität: 06.07.2001 DE 10132963
(43) Veröffentlichungstag der Anmeldung: 08.01.2003
(73) Patentinhaber: SWS Gesellschaft für Glasbaubeschläge mbH, 51545 Waldbröl (DE)
(72) Erfinder: Wagner, Jürgen, Dipl.-Kfm., 51580 Reichshof-Denklingen (DE); Schmitz, Hans-Dieter, 53809 Ruppichteroth (DE); Heim, Nenad, 51545 Waldbröl (DE)
(74) Vertreter: Lippert, Stachow & Partner

(56) Entgegenhaltungen:
- EP-A- 0 573 902
- EP-A- 0 662 735
- DE-U- 9 318 761
- DE-U- 20 107 908
- DE-U- 29 901 960
- US-A- 5 501 612
- US-A- 5 594 573

## Beschreibung

Die Erfindung betrifft eine Klemmvorrichtung zum Befestigen von Platten, insbesondere transparenten Glasscheiben, nach dem Oberbegriff des Anspruches 1.

Derartige Klemmvorrichtungen sind beispielsweise aus den DE-Gebrauchsmusterschriften G 93 18 761.0 U1 und DE 299 01 960 U1 bekannt.

Die Klemmvorrichtung nach der DE-Gebrauchsmusterschrift G 93 18 761.0 U1 besteht aus zwei am seitlichen Rand der zu befestigenden Platte ansetzbaren Klemmbacken, die an ihren Innenseiten sich an die zu befestigende Platte anlegende Polster aus elastomerem Werkstoff aufweisen. Beide Klemmbacken sind durch mindestens eine Klemmschraube gegeneinander spannbar. Außerdem weist eine der beiden Klemmbacken ein rechtwinklig zu dieser Klemmbacke stehendes Basisteil mit einer Durchführung für eine Befestigungsschraube auf, mit der die Klemmvorrichtung an eine vertikale Wand oder einen Pfosten angeschraubt werden kann. Jedes der beiden Gummi-Klemmpolster weist an seiner Rückseite gegen die zugehörige Klemmbacke gerichtete noppen- oder stegförmige Haltevorsprünge auf, mit denen das Klemmpolster an der Innenseite der betreffenden Klemmbacke festgelegt ist.

Derartige Klemmvorrichtungen gibt es in den verschiedensten Ausführungen. Sie dienen in der Regel zur punktweisen Halterung von Platten und Glasscheiben an Treppengeländern, Balkonbrüstungen, an Gehwegbegrenzungen in Bürogebäuden, in Ausstellungsgebäuden und Flughäfen - um nur einige Beispiele zu nennen - ebenso wie in zahlreichen anderen Anwendungsfällen, wo es darum geht, Platten und insbesondere Glasscheiben zwischen senkrechten oder waagerechten Trageinrichtungen, wie Pfosten, Wänden und dergleichen, sicher zu befestigen.

Als weiteres Beispiel für bekannte Klemmvorrichtungen für Glasscheiben und Platten ist auf die oben genannte Gebrauchsmusterschrift DE 299 01 960 U1 hinzuweisen. Diese Gebrauchsmusterschrift zeigt ein Glasfassungsklemmprofil, das insbesondere für eine hängende Halterung von Glasplatten bestimmt ist, gleichermaßen jedoch auch für eine seitliche und/oder senkrechte Halterung und Abstützung von Glasplatten oder dergleichen eingesetzt werden kann.

Für eine hängende Halterung von Glasplatten werden vielfach im Bereich von Verkaufs- und/oder Gefriertheken und dergleichen Glasfassungsklemmprofile eingesetzt, wie sie aus DE 299 01 960 U1 bekannt sind.

Generell haben die bekannten Klemmvorrichtungen die Aufgabe, eine mechanisch sichere, den einschlägigen Vorschriften genügende Halterung der eingespannten Glasscheiben und Platten zu gewährleisten. Bei der Befestigung der Platten und Glasscheiben kommt es daher in erster Linie darauf an, daß die verwendeten Klemmvorrichtungen die Platten, Glasscheiben oder Glastrennwandteile zwischen ihren Klemmbacken auch unter höchsten Belastungen sicher festhalten, ohne daß die Gefahr einer Beschädigung der Glasscheiben oder Platten infolge der linienförmigen Klemmwirkung der Klemmbacken besteht.

In jüngster Zeit zeigt sich auch eine Tendenz, derartige Glasscheiben, wie sie beispielsweise an Treppengeländern, Balkonbrüstungen und an anderen zahlreichen Einsatzbereichen in der Gebäudetechnik eingesetzt werden, nicht nur in einer mechanisch konstruktiven Weise zur Personensicherung und für ähnliche Zwecke einzusetzen, sondern den Glasscheiben, Glastrennwänden und ähnlichen Konstruktionselementen zusätzlich eine aktive optische, sensitive oder akustische Funktion, beispielsweise in Form einer Lichtreklame, einer Beleuchtung, in Form eines tastempfindlichen Sensors, einer elektroakustischen Warneinrichtung oder dergleichen zu geben.

Entsprechende Hinweise sind beispielsweise der Gebrauchsmusterschrift DE 297 11 973 U1 zu entnehmen.

Praktisch ungelöst ist bisher das Problem einer einwandfreien elektrischen Verbindung bei den bekannten mechanischen Klemmvorrichtungen für die dauerhafte Halterung und Befestigung von Platten und insbesondere mehrschichtigen Glasscheiben, wenn diese mit zusätzlichen elektrischen, elektronischen und/oder elektroakustischen Funktionen ausgestattet sind.

Mit der prioritätsälteren, jedoch erst später im Prioritätsintervall des vorliegenden Patentes nachveröffentlichten Gebrauchsmusterschrift DE 201 07 908 U1 ist bereits vorgeschlagen worden, dass jede derartige Klemmvorrichtung an einer der beiden Klemmbacken eine weitere Durchführung für eine Anschlussleitung für die Stromzufuhr zu Kontaktflächen aufweist, die an dem Polster der betreffenden Klemmbacke angeordnet sind und aus einem elektrisch leitfähigen Kunststoff bestehen. Diese können auf das Polster aufgeklebt oder mit diesem einstückig ausgeformt sein. Bei dieser Ausführungsform werden die Kontakte mit ihren Kontaktflächen lediglich durch Klemmdruck an die dünne elektrisch leitfähige Schicht an der Glasplatte angedrückt. Hierdurch ist jedoch das Problem einer funktionssicheren dauerhaften elektrischen Verbindung zwischen der Anschlussleitung und den elektrischen Leiterbahnen an den eingeklemmten transparenten Platten und Glasscheiben noch nicht zufriedenstellend gelöst, da sich der Anpressdruck der Klemmbacken und damit die Kontaktgabe von den Kontaktflächen zu den elektrischen Leiterbahnen an der Glasscheibe durch mechanische Beanspruchungen mit der Zeit verändern kann.

Eine weitere, aus US 5 501 612 A bekannte elektrische Leiterverbindung betrifft eine Verbindung von elektrischen Leiterplatten oder Platinen durch ein flexibles Film- oder Folienleiterelement mit mehreren Leiterbahnen. Bei dieser Anordnung besteht die elektrische Verbindung zwischen einer Steckereinrichtung mit vielen Kontaktstiften und dem flexiblen Leiterelement aus einer äußerst sperrigen und somit platzraubenden Anschlussverbindung. An einem dielektrischen Gehäuse befinden sich mehrere nach unten gerichtete Kontaktstifte mit oberen Kontaktabschnitten, an denen das flexible Folien-Leiterelement durch Löten fest und unlösbar verbunden ist. Die Leiterbahnen des flexiblen Leiterelementes sind an der oben liegenden Innenseite des Steckergehäuses an entsprechende obere Stiftabschnitte des Steckers gelötet. Die Verbindung ist durch eine dünne Schicht einer Vergussmasse aus Kunstharz oder einem anderen geeigneten Material abgedeckt. Außerdem ist eine Abdeckplatte mit Endflanschen vorgesehen, die die elektrische Anschlussverbindung über deren gesamte Länge vollständig überdeckt und an ihren Enden mit dem Gehäuse fest verschraubt ist.

Der Erfindung liegt die Aufgabe zugrunde, ausgehend von den bekannten Klemmvorrichtungen für die Befestigung und Halterung von Platten und Glasscheiben eine funktionssichere und einfach zu montierende elektrische Anschlußverbindung zu schaffen, mit der es in sicherheitstechnisch einwandfreier Weise möglich ist, zusätzlich zu der mechanischen Haltefunktion der Klemmvorrichtungen auch eine einwandfrei funktionierende dauerhafte elektrische Verbindung zu den elektrischen Leiterbahnen an ein- und mehrschichtigen Platten und Glasscheiben herzustellen.

Diese Aufgabe wird ausgehend von einer Klemmvorrichtung nach dem Oberbegriff des Anspruches 1 gemäß der Erfindung dadurch gelöst, daß der elektrische Anschluß aus einer vielpoligen Anschlußleiste mit mehreren Klemmbuchsen für eine Steckverbindung mit einer bandförmigen hoch flexiblen mehrpoligen Folienleiterbahn, die mit den elektrischen Leiterbahnen an der Platte oder Glasscheibe verbunden ist, besteht.

Besonders vorteilhafte Weiterbildungen der Erfindung sind in den Ansprüchen 2 bis 8 gekennzeichnet.

Die Erfindung hat den Vorteil, daß die beiden Funktionen der mechanischen Klemmbefestigung und der elektrischen Anschlußverbindung für die festgehaltenen Platten oder Glasscheiben durch die flexible, mechanisch nachgiebige elektrische Verbindung vollständig voneinander getrennt sind. Hierdurch können die mechanische Sicherung der Platte oder Scheibe und die elektrische Anschlußverbindung völlig unabhängig voneinander den jeweiligen Erfordernissen sowohl in mechanischer als auch in elektrischer Hinsicht in einfacher Weise optimal angepaßt werden. Die elektrische Anschlußverbindung kann in weiten Grenzen völlig unabhängig von der mechanischen Klemmbefestigung ausgelegt und auch variiert werden.

Eine auch gegen Witterungseinflüsse besonders sichere elektrische Verbindung wird dabei weiterhin dadurch erreicht, daß die vielpolige Anschlußleiste mit einer elektronischen Leiterbahn-Platine in einer Gummi-Vergußmasse an dem Basisteil der Klemmvorrichtung angeordnet und mit einer elektrischen Anschlußleitung verbunden ist.

Die Anschlußleitung ist dabei zweckmäßig mit einer Zugentlastung gesichert, so dass auch insoweit die Gefahr von Beschädigungen der Anschlußverbindung minimiert wird.

In einer besonders robusten und sicheren Ausführungsform besteht die Klemmvorrichtung aus zwei gegeneinander spannbaren Klemmbacken, von denen eine mit einem abgewinkelten Basisteil mit mindestens einer Bohrung für eine Befestigungsschraube sowie einer Durchführung für die elektrische Anschlußleitung ausgebildet ist, und wobei die Anschlußleiste mit der Leiterbahn-Platine, der Vergußmasse, der Zugentlastung und dem Klemmpolster eine Baueinheit bildet und vorzugsweise an der Klemmbacke mit dem Basisteil in einer wannenartigen Vertiefung angeordnet ist, die bis zu der rückwärtigen Durchführung für die elektrische Anschlußleitung am Basisteil reicht.

Hierbei wird auch die Montage besonders dadurch erleichtert, daß die Anschlußleiste an der Klemmvorrichtung parallel zwischen dem Basisteil und dem Rand der zu haltenden Platte oder Glasscheibe derart angeordnet ist, daß die bandförmige mehrpolige Folienleiterbahn durch beliebige Biegungen in die Anschlußleiste eingesteckt werden kann.

Weitere besonders vorteilhafte Einzelheiten von erfindungsgemäßen Klemmvorrichtungen ergeben sich aus den Merkmalen der Ansprüche 6 bis 8.

Weitere Einzelheiten und Vorteile der Erfindung ergeben sich aus der nachfolgenden Beschreibung von in der Zeichnung schematisch dargestellten Ausführungsbeispielen. Es zeigen
- Fig. 1: ein erstes Ausführungsbeispiel einer Klemmvorrichtung mit elektrischen Anschlüssen in perspektivischer Ansicht,
- Fig. 2: eine Draufsicht auf die Klemmvorrichtung von Fig. 1 mit einer mehrschichtigen Verbund-Sicherheitsglasscheibe,
- Fig. 3: eine rückwärtige Ansicht der hinteren Klemmbacke der Klemmvorrichtung von Fig. 1 und 2,
- Fig. 4: eine Innenansicht dieser Klemmbacke in Richtung des Pfeiles IV von Fig. 3,
- Fig. 5: einen waagerechten Schnitt durch die Klemmbacke gemäß Schnittlinie V - V von Fig. 4,
- Fig. 6: eine gegenüber Fig. 1 bis 5 vergrößerte Innenansicht der hinteren Klemmbacke der Klemmvorrichtung mit Klemmpolster und elektrischer Anschlußvorrichtung zur Verbindung von elektrischen Leiterbahnen an einer gestrichelt angedeuteten Verbund-Sicherheitsglasscheibe mit einem Stromnetz,
- Fig. 7: einen waagerechten Schnitt durch die Klemmbacke gemäß Schnittlinie VII - VII von Fig. 6,
- Fig. 8: einen weiteren Schnitt durch die Klemmvorrichtung gemäß Schnittlinie VIII - VIII von Fig. 7,

- Fig. 9: eine perspektivische Ansicht einer weiteren Ausführungsform einer Klemmvorrichtung, die als Glasfassungsklemmprofil ausgebildet ist, mit einer mehrschichtigen Glasscheibe mit elektrischen Leiterbahnen sowie einer elektrischen Anschlußeinrichtung zur Verbindung der Leiterbahnen mit einem elektrischen Stromnetz,
- Fig. 10: einen senkrechten Schnitt durch die Klemmvorrichtung von Fig. 9,
- Fig.11: eine teilweise aufgeschnittene Draufsicht auf diese Klemmvorrichtung in Richtung des Pfeiles XI von Fig. 9 und
- Fig. 12: einen Schnitt durch die Klemmvorrichtung gemäß Schnittlinie XII - XII von Fig. 11.

Die gezeigten Klemmvorrichtungen 1 dienen zum Befestigen von Platten, insbesondere transparenten Glasscheiben 2, mit vielfältigen zusätzlichen elektrischen, elektronischen und/oder elektroakustischen Funktionen. Jede Klemmvorrichtung 1 besteht aus mindestens zwei an einer Platte oder Glasscheibe 2 ansetzbaren Klemmteilen 3, 4, die an ihren Innenseiten sich an die Platte 2 anlegende Klemmpolster 5, 6 aus elastomerem Werkstoff aufweisen und die von mindestens einer Klemmschraube 7 gegeneinander spannbar sind.

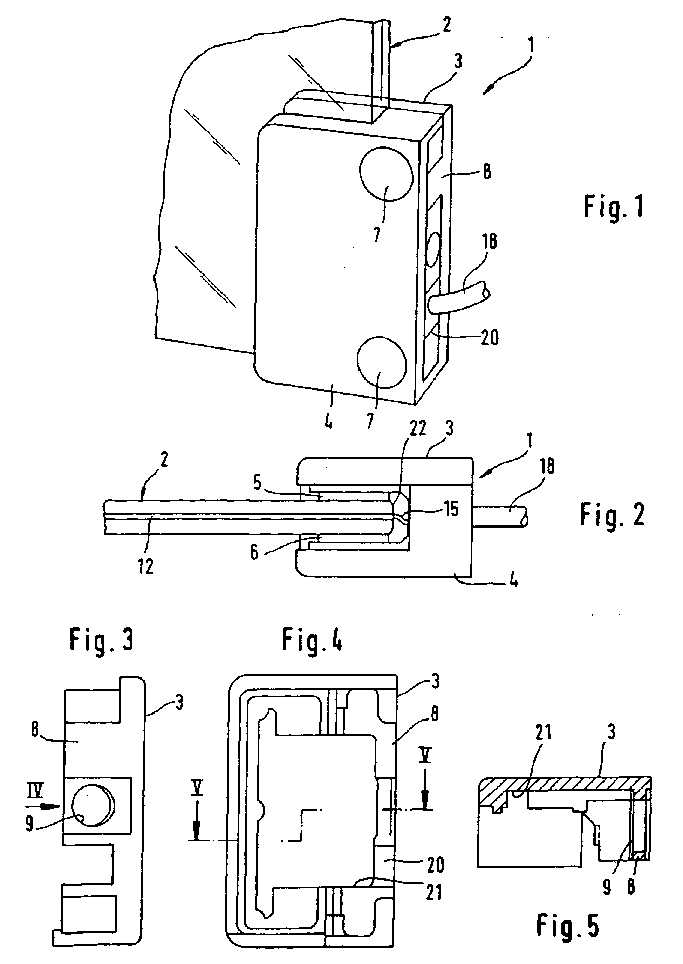

Wie insbesondere in Fig. 3 bis 5 in Verbindung mit Fig. 1 zu erkennen ist, hat das in Fig. 1 hintere Klemmteil 3 dieser ersten Klemmvorrichtung 1 ein zu ihm rechtwinklig stehendes Basisteil 8 mit einer Bohrung 9, das mittels mindestens einer Befestigungsschraube an einen vertikalen oder horizontalen Träger, wie eine Wand, Decke, Boden, Pfosten oder dergleichen, angeschraubt werden kann.

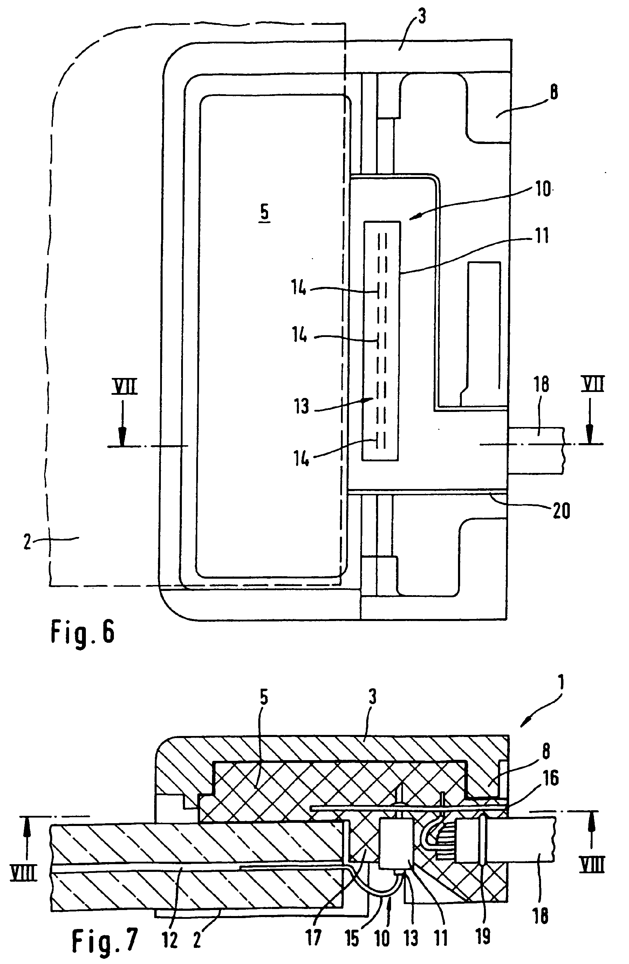

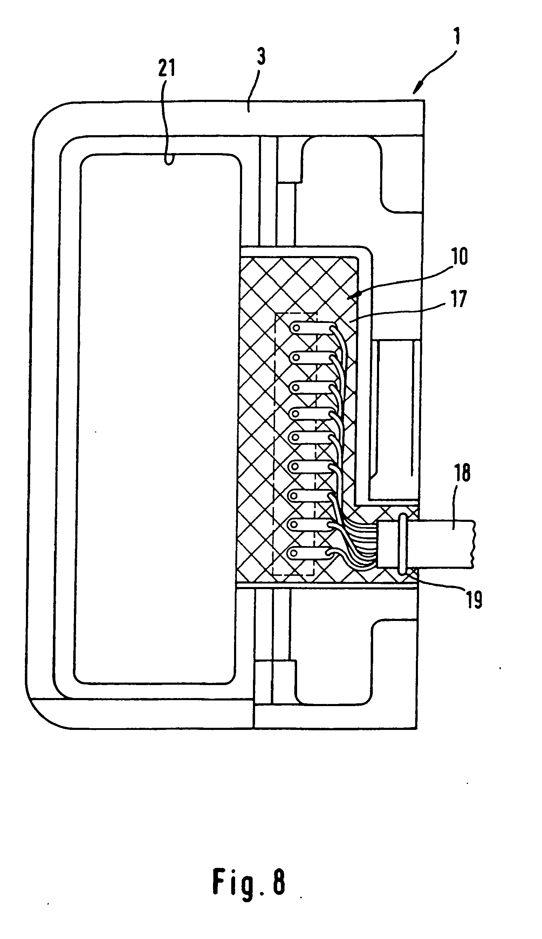

Außerdem hat die Klemmvorrichtung 1, wie insbesondere in Fig. 6 bis 8 im einzelnen gezeigt ist, einen flexiblen, mechanisch nachgiebigen elektrischen Anschluß 10 mit einer zwei- oder mehrpoligen Steckverbindung 11 für ein- und mehrschichtige Platten oder Glasscheiben 2 mit einer elektrischen Leiteranordnung 12 aus einem oder mehreren nichtleitenden Trägermaterialien und mehreren elektrischen Leiterbahnen.

Der elektrische Anschluß 10 besteht aus einer vielpoligen Anschlußleiste 13 mit mehreren Klemmbuchsen 14 für eine Steckverbindung mit einer bandförmigen hoch flexiblen mehrpoligen Folienleiterbahn 15, die mit den elektrischen Leiterbahnen 12 an der Platte oder Glasscheibe 2 verbunden ist.

Die vielpolige Anschlußleiste 13 ist mit einer elektronischen Leiterbahn-Platine 16 (Fig. 7) in einer Gummi-Vergußmasse 17 an dem Basisteil 8 der Klemmvorrichtung 1 angeordnet und mit einer elektrischen Anschlußleitung 18 verbunden.

Außerdem ist die Anschlußleitung 18 mit einer Zugentlastung 19 in der Vergußmasse 17 und/oder an der Leiterbahn-Platine 16 gesichert.

Wie in Fig. 1 bis 8 weiterhin zu erkennen ist, besteht die Klemmvorrichtung 1 somit aus zwei gegeneinander spannbaren Klemmbacken 3, 4, von denen eine (3) mit dem abgewinkelten Basisteil 8 und mit mindestens einer Öffnung oder Bohrung 9 für eine Befestigungsschraube sowie einer Durchführung 20 für die elektrische Anschlußleitung 18 ausgebildet ist. Die Anschlußleiste 13 bildet dabei mit der Leiterbahn-Platine 16, der Vergußmasse 17, der Zugentlastung 19 und dem Klemmpolster 5 eine Baueinheit und ist vorzugsweise an der Klemmbacke 3 mit dem Basisteil 8 in einer wannenartigen Vertiefung 21 angeordnet ist, die bis zu der rückwärtigen Durchführung 20 für die elektrische Anschlußleitung 18 am Basisteil 8 reicht.

Die Anschlußleiste 13 ist an der Klemmvorrichtung 1 parallel zwischen dem Basisteil 8 und dem Rand 22 der zu haltenden Platte oder Glasscheibe 2 derart angeordnet, daß die bandförmige mehrpolige Folienleiterbahn 15 durch beliebige Biegungen in die Anschlußleiste 13 eingesteckt werden kann (Fig. 7).

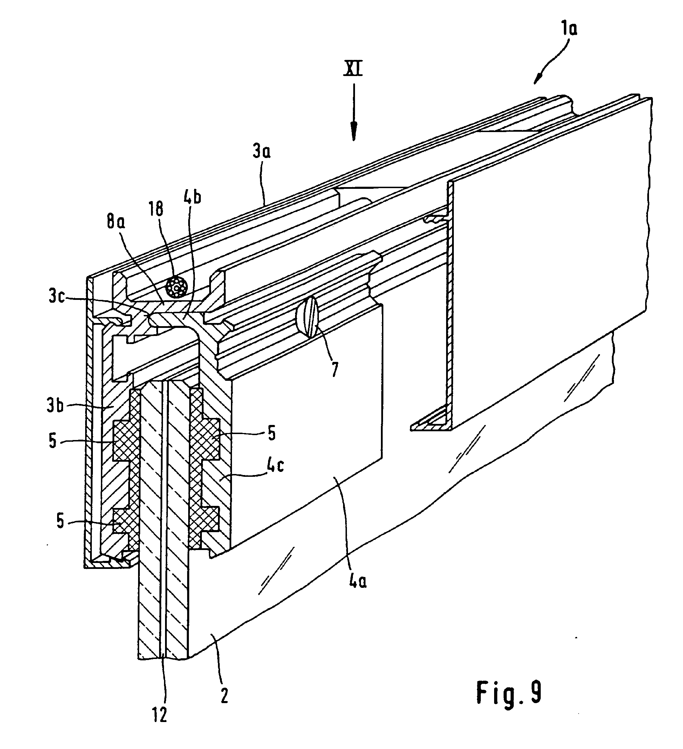

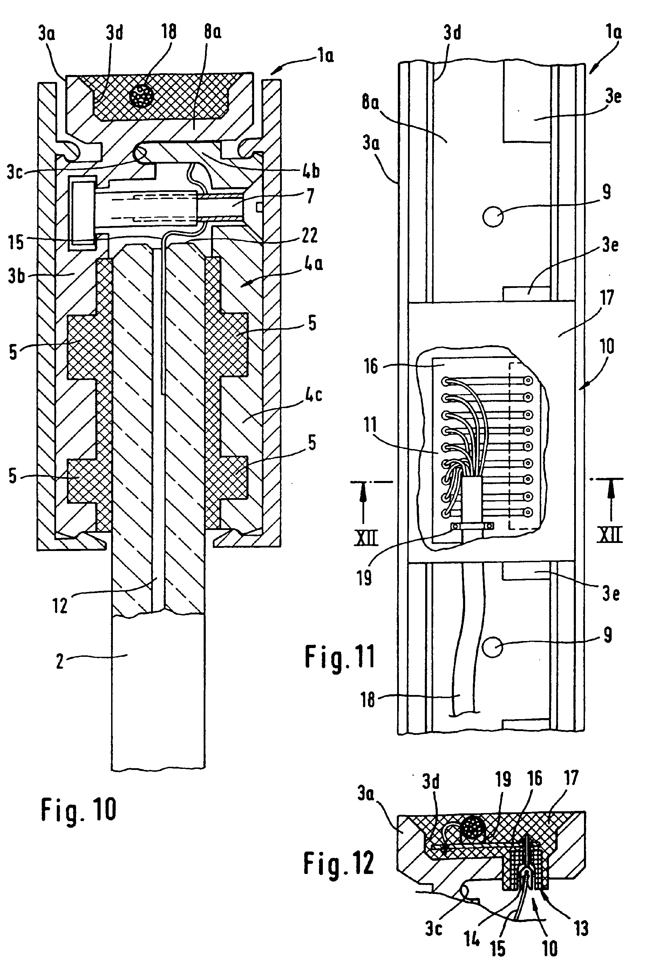

Im Unterschied zu dem ersten Ausführungsbeispiel handelt es sich bei der zweiten Klemmvorrichtung 1 a von Fig. 9 bis 12 um ein linienförmiges Klemmsystem, das aus einem Glasfassungsklemmprofil mit einem vorzugsweise über die Länge oder Breite der Platte oder Glasscheibe 2 durchgehenden Grundprofil 3a mit einem Basisschenkel 8a zur Befestigung des Grundprofils 3a an einem Träger, wie ein Tragprofil, an einer Wand oder dergleichen besteht. Das Grundprofil 3a hat einen an der Platte oder Glasscheibe anliegenden Tragschenkel 3b mit daran befestigten Klemmpolstern 5. Dieser Tragschenkel 3b wirkt mit einer oder mehreren Klemmplatten 4a zusammen, die über die Länge des Grundprofils 3a verteilt sein können und mit einem oberen Stützschenkel 4b in einer ausgekehlten Längsnut 3c an dem Grundprofil 3a derart kippbar gelagert sind, daß sie mit einem abwärtsgerichteten Klemmschenkel 4c an der Platte oder Glasscheibe 2 anliegen und diese somit gegen den Tragschenkel 3b des Grundprofils 3a derart fest andrücken, daß die Platte oder Glasscheibe 2 absolut sicher festgehalten wird.

Wie in Fig. 9 bis 12 im einzelnen zu erkennen ist, ist bei diesem zweiten Ausführungsbeispiel die Anschlußleiste 13 mit der Leiterbahn-Platine 16, der Vergußmasse 17 und der Zugentlastung 19 an dem Basisschenkel 8a des Grundprofils 3a in einer außenliegenden Längsnut 3d mit mehreren länglichen Anschlußöffnungen 3e zu der Platte oder Glasscheibe 2 hin derart angeordnet, daß die Anschlußleiste 13 durch die Anschlußöffnungen 3e an dem Basischenkel 8a in Richtung auf die zu haltende Platte oder Glasscheibe 2 zur Steckverbindung mit der bandförmigen hoch flexiblen mehrpoligen Folienleiterbahn 15 an der Platte oder Glasscheibe 2 hindurchragt. Jede Anschlußöffnung 3e ist länger als das Anschlußelement mit der Anschlußleiste 13, so daß eine ausreichende Längen- oder Höhentoleranz bei der Montage der Platte oder Scheibe 2 besteht.

Über die Länge des Basisschenkels 8a des Grundprofils 3a sind mehrere längliche Anschlußöffnungen 3e für die Anschlußleiste 13 derart verteilt, daß die Anschlußleiste 13 an dem Grundprofil 3a ganz nach Bedarf an jeder gewünschten Stelle montiert werden kann. Außerdem befinden sich im Basisschenkel 8a mehrere Bohrungen 9 zur Wandbefestigung der Profilemente.

Die Anschlußleiste 13 und die Folienleiterbahn 15 sind bei beiden gezeigten Ausführungsbeispielen mindestens zwei- oder mehrpolig, beispielsweise 9-polig ausgebildet, können jedoch auch noch wesentlich mehr Pole aufweisen.

### Liste der Bezugszeichen

- 1: Klemmvorrichtung
- 1 a: Klemmvorrichtung
- 2: Platten, Glasscheiben
- 3: Klemmteil
- 3a: Grundprofil
- 3b: Tragschenkel
- 3c: Längsnut
- 3d: Längsnut
- 3e: Anschlußöffnung
- 4: Klemmteil
- 4a: Klemmplatte(n)
- 4b: Stützschenkel
- 4c: Klemmschenkel
- 5: Klemmpolster
- 6: Klemmpolster
- 7: Klemmschraube
- 8: Basisteil
- 8a: Basisschenkel
- 9: Bohrung
- 10: elektrischer Anschluß
- 11: vielpolige Steckverbindung
- 12: elektrische Leiteranordnung, Leiterbahnen
- 13: Anschlußleiste
- 14: Klemmbuchsen
- 15: mehrpolige Folienleiterbahn
- 16: elektronische Leiterbahn-Platine
- 17: Gummi-Vergußmasse
- 18: Anschlußleitung
- 19: Zugentlastung
- 20: Durchführung
- 21: wannenartige Vertiefung
- 22: Rand der Platte oder Scheibe 2

## Patentansprüche

1. Klemmvorrichtung zum Befestigen von Platten, insbesondere transparenten Glasscheiben, mit mindestens zwei an der Platte (2) ansetzbaren Klemmteilen (3, 4; 3a, 4a), die an ihren Innenseiten sich an die Platte (2) anlegende Klemmpolster (5) aus elastomerem Werkstoff aufweisen und die von mindestens einer Klemmschraube (7) gegeneinander spannbar sind, wobei ein Klemmteil (3; 3a) ein zu diesem rechtwinklig stehendes Basisteil (8; 8a) hat, das mittels mindestens einer Befestigungsschraube an einen vertikalen oder horizontalen Träger, wie eine Wand, Decke, Boden, Pfosten oder dergleichen, anschraubbar ist, und wobei die Klemmvorrichtung (1; 1a) einen flexiblen, mechanisch nachgiebigen elektrischen Anschluß (10) mit einer vielpoligen Steckverbindung (11) für ein- und mehrschichtige Platten oder Glasscheiben (2) mit einer elektrischen Leiteranordnung (12) aus einem oder mehreren nichtleitenden Trägermaterialien und mehreren elektrischen Leiterbahnen aufweist, **dadurch gekennzeich net** , daß der elektrische Anschluß (10) aus einer vielpoligen Anschlußleiste (13) mit mehreren Klemmbuchsen (14) für eine Steckverbindung mit einer bandförmigen hoch flexiblen mehrpoligen Folienleiterbahn (15), die mit den elektrischen Leiterbahnen (12) an der Platte oder Glasscheibe (2) verbunden ist, besteht.

2. Klemmvorrichtung nach Anspruch 1, **dadurch gekennzeichnet, daß** die vielpolige Anschlußleiste (13) mit einer elektronischen Leiterbahn-Platine (16) in einer Gummi-Vergußmasse (17) an dem Basisteil (8; 8a) der Klemmvorrichtung (1; 1a) angeordnet und mit einer elektrischen Anschlußleitung (18) verbunden ist.

3. Klemmvorrichtung nach Anspruch 1 oder 2, **dadurch gekennzeichnet, daß** die Anschlußleitung (18) mit einer Zugentlastung (19) gesichert ist.

4. Klemmvorrichtung nach einem der vorhergehenden Ansprüche, **dadurch gekennzeichnet, daß** die Klemmvorrichtung (1) aus zwei gegeneinander spannbaren Klemmbacken (3, 4) besteht, von denen eine mit einem abgewinkelten Basisteil (8) mit mindestens einer Bohrung (9) für eine Befestigungsschraube sowie einer Durchführung (20) für die elektrische Anschlußleitung (18) ausgebildet ist, und daß die Anschlußleiste (13) mit der Leiterbahn-Platine (16), der Vergußmasse (17), der Zugentlastung (19) und dem Klemmpolster (5) eine Baueinheit bildet und vorzugsweise an der Klemmbacke (3) mit dem Basisteil (8) in einer wannenartigen Vertiefung (21) angeordnet ist, die bis zu der rückwärtigen Durchführung (20) für die elektrische Anschlußleitung (18) am Basisteil (8) reicht.

5. Klemmvorrichtung nach einem der vorhergehenden Ansprüche, **dadurch gekennzeichnet, daß** die Anschlußleiste (13) an der Klemmvorrichtung (1) parallel zwischen dem Basisteil (8) und dem Rand (22) der zu haltenden Platte oder Glasscheibe (2) derart angeordnet ist, daß die bandförmige mehrpolige Folienleiterbahn (15) durch beliebige Biegungen in die Anschlußleiste (13) eingesteckt werden kann.

6. Klemmvorrichtung nach Anspruch 1, **dadurch gekennzeichnet, daß** die Klemmvorrichtung (1a) aus einem Glasfassungsklemmprofil mit einem vorzugsweise über die Länge oder Breite der Platte oder Glasscheibe (2) durchgehenden Grundprofil (3a) mit einem Basisschenkel (8a) zur Befestigung des Grundprofils (3a) an einem Träger, wie ein Tragprofil, an einer Wand oder dergleichen, und einem an der Platte oder Glasscheibe (2) anliegenden Tragschenkel (3b) mit daran befestigten Klemmpolstern (5) sowie an dem Tragschenkel (3b) mittels Klemmschrauben (7) verteilt befestigbaren Klemmplatten (4a) besteht, die mit einem oberen Stützschenkel (4b) in einer ausgekehlten Längsnut (3c) an dem Grundprofil (3a) kippbar gelagert sind und mit einem abwärtsgerichteten Klemmschenkel (4c) an der Platte oder Glasscheibe (2) anliegen, und daß die Anschlußleiste (13) mit der Leiterbahn-Platine (16), der Vergußmasse (17) und der Zugentlastung (19) an dem Basisschenkel (8a) des Grundprofils (3a) in einer außenliegenden Längsnut (3d) mit mehreren länglichen Anschlußöffnungen (3e) zu der Platte oder Glasscheibe (2) hin derart angeordnet ist, daß die Anschlußleiste (13) durch die Anschlußöffnungen (3e) an dem Basisschenkel (8a) in Richtung auf die zu haltende Platte oder Glasscheibe (2) zur Steckverbindung mit der bandförmigen hoch flexiblen mehrpoligen Folienleiterbahn (15) an der Platte oder Glasscheibe (2) hindurchragt.

7. Klemmvorrichtung nach Anspruch 6, **dadurch gekenn-zeichnet,** daß über die Länge des Basisschenkels (8a) des Grundprofils (3a) mehrere längliche Anschlußöffnungen (3e) derart verteilt sind, daß die Anschlußleiste (13) an dem Grundprofil (3a) ganz nach Bedarf an jeder gewünschten Stelle montiert werden kann.

8. Klemmvorrichtung nach einem der Ansprüche 1 bis 7, **dadurch gekennzeichnet, daß** die Anschlußleiste (13) und die Folienleiterbahn (15) mindestens zwei- oder mehrpolig ausgebildet sind.

## Claims

1. Clamp fixture for fixing panels, especially transparent glass panes, with at least two clamping parts (3, 4; 3a, 4a) which may be applied against said panel (2) and which include on the inner sides thereof clamping pads (5) from an elastomeric material that will contact said panel (2) and which can be tightened one against the other by at least one clamping screw (7), one clamping part (3; 3a) having un upright base part (8; 8a) arranged at right angles thereto, which base part may be screw-fixed to a vertical or horizontal support such as a wall, ceiling, floor, post or the like by means of at least one fixing screw, and said clamp fixture (1; 1 a) including a flexible mechanically yielding electrical connection (10) with a multi-pole plug-type connector (11) for one- and multi-layer panels or glass panes (2) with an electric strip conductor (12) from one or plural non-conducting supporting materials and plural electrical strip conductors, **characterized in**
**that** said electrical connection (10) consists of a four-pole terminal block (13) with plural terminal sleeves (14) for a plug-type connection with a band-shaped highly flexible multi-pole foil strip conductor (15) which is connected to the electrical strip conductors (12) on said panel or glass pane (2).

2. Clamp fixture according to claim 1, **characterized in**
**that** said multi-pole terminal block (13) with an electronic strip conductor board (16) is arranged in a rubber sealing compound (17) on the base part (8; 8a) of said clamp fixture (1; 1a) and is connected to an electrical connection line (18).

3. Clamp fixture according to claim 1 or 2, **characterized in that** said electrical connection line (18) is secured with a strain relief (19).

4. Clamp fixture according to any one of the preceding claims,
**characterized in that** said clamp fixture (1) consists of two clamping jaws (3, 4) which can be tightened one against the other, one of said clamping jaws being formed with an angled base part (8) with at least one bore (9) for a fixing screw as well as with a passage (20) for the electrical connection line (18), and that the terminal block (13) together with the strip conductor board (16), sealing compound (17), strain relief (19) and clamping pad (5) forms a structural unit and is preferably arranged on the clamping jaw (3) with the base part (8) in a tub-like recess (21) which reaches up to the rear side passage (20) for the electrical connection line (18) on the base part (8).

5. Clamp fixture according to any one of the preceding claims,
**characterized in that** said terminal block (13) on said clamp fixture (1) is arranged in a parallel fashion between said base part (8) and said rim (22) of the panel or glass pane (2) to be supported in such way that the band-shaped multi-pole foil strip conductor (15) may be plugged into said terminal block (13) by arbitrary flexion.

6. Clamp fixture according to claim 1, **characterized in that** the clamp fixture (1a) consists of a glass mounting clamping profile with a base profile (3a) which is preferably continuous over the length or width of the panel or glass pane (2) and includes a base leg (8a) for fixing the base profile (3a) to a support such as a supporting profile, to a wall or the like, and a supporting leg (3b) which rests against the panel or glass pane (2) and has fixed to it clamping pads (5) as well as of clamping plates (4a) which are distributed and fixed to the supporting leg (3b) by means of clamping screws (7), which clamping plates are tiltably supported with an upper supporting leg (4b) in a hollow longitudinal groove (3c) on the base profile (3a) and rest against the panel or glass pane (2) with a downwardly directed clamping leg (4c), and that the terminal block (13) together with the strip conductor board (16), the sealing compound (17) and the strain relief (19) on the base leg (8a) of the base profile (3a) is arranged in an external positioned longitudinal groove (3d) with plural oblong connection openings (3e) towards the panel or glass pane (2) in such a manner that the terminal block (13) protrudes through the connection openings (3e) on the base leg (8a) in the direction towards the panel or glass pane (2) to be held for a plug-type connection with the band-shaped highly flexible multi-pole foil strip conductor (15) on the panel or glass pane (2).

7. Clamp fixture according to claim 6, **characterized in that** over the length of the base leg (8a) of the base profile (3a) plural oblong connection openings (3e) are distributed in such a manner that the terminal block (13) on the base profile (3a) may be mounted as required in any desired place.

8. Clamp fixture according to one of the claims 1 to 7,
**characterized in that** said terminal block (13) and said foil strip conductor (15) are formed with at least two or more poles.

## Revendications

1. Dispositif de serrage pour fixer des panneaux, en particulier des vitres transparentes, avec au moins deux pièces de serrage (3, 4; 3a, 4a) qui peuvent être montées sur le panneau (2) qui présentent, sur leurs côtés intérieurs, des rembourrages de serrage (5) en un matériau élastomère qui se posent sur le panneau (2) et qui peuvent être serrés l'un contre l'autre par au moins une vis de serrage (7), une pièce de serrage (3; 3a) ayant une pièce de base (8; 8a) qui est à angle droit par rapport à elle, pièce de base qui peut être vissée par au moins une vis de fixation à un support vertical ou horizontal tel qu'un mur, plafond, sol, montant ou équivalent et le dispositif de serrage (1; 1 a) ayant un raccord électrique (10) flexible, souple mécaniquement avec une fiche de raccordement multipolaire (11) pour des panneaux ou vitres en une ou plusieurs couches (2) avec un dispositif de conducteurs électriques (12) constitué par un ou plusieurs matériaux supports non conducteurs et plusieurs circuits imprimés électriques, **caractérisé en ce que** le raccord électrique (10) est constitué par une réglette de raccordement multipolaire (13) avec plusieurs douilles de serrage (14) pour une fiche de raccordement avec une piste conductive multipolaire en feuille extrêmement flexible en forme de bande (15) qui est reliée aux circuits imprimés électriques (12) sur le panneau ou la vitre (2).

2. Dispositif de serrage selon la revendication 1, **caractérisé en ce que** la réglette de raccordement multipolaire (13) est placée avec une platine électronique de circuits imprimés (16) dans une masse de scellement en caoutchouc (17) sur la pièce de base (8; 8a) du dispositif de serrage (1; 1a) et est reliée à une conduite de raccord électrique (18).

3. Dispositif de serrage selon la revendication 1 ou 2, **caractérisé en ce que** la conduite de raccord (18) est protégée avec une décharge de tension (19).

4. Dispositif de serrage selon l'une des revendications précédentes, **caractérisé en ce que** le dispositif de serrage (1) est constitué par deux mâchoires de serrage (3, 4) pouvant être serrées l'une contre l'autre dont l'une (3) est configurée avec une pièce de base coudée (8) avec au moins une forure (9) pour une vis de fixation ainsi qu'un passage (20) pour la conduite de raccord électrique (18) et que la réglette de raccordement (13) forme une unité avec la platine de circuits imprimés (16), la masse de scellement (17), la décharge de tension (19) et le rembourrage de serrage (5) et est de préférence placée sur la mâchoire de serrage (3) avec la pièce de base (8) dans un évidement de type cuvette (21) qui va jusqu'au passage arrière (2)0 pour la conduite de raccord électrique (18) sur la pièce de base (8).

5. Dispositif de serrage selon l'une des revendications précédentes, **caractérisé en ce que** la réglette de raccordement (13) est placée sur le dispositif de serrage (1) parallèlement entre la pièce de base (8) et le bord (22) du panneau ou de la vitre à maintenir (2) de telle manière que la piste conductive multipolaire en feuille en forme de bande (15) peut être emboîtée dans la réglette de raccordement (13) par des courbures quelconques.

6. Dispositif de serrage selon la revendication 1, **caractérisé en ce que** le dispositif de serrage (1a) est constitué par un profilé de serrage de cadre en verre avec un profilé de base (3a) de préférence continu sur la longueur ou la largeur du panneau ou de la vitre (2) avec un montant de base (8a) pour la fixation du profilé de base (3a) à un support comme un profilé de support, à un mur ou équivalent et par un montant de support (3b) qui est posé contre le panneau ou la vitre avec des rembourrages de serrage (5) qui y sont fixés ainsi que des plaques de serrage (4a) qui peuvent être réparties en pouvant être fixées sur le montant de support (3b) au moyen de vis de serrage, plaques qui sont positionnées basculantes avec un montant d'appui supérieur (4b) dans une rainure longitudinale cannelée (3c) sur le profilé de base (3a) de telle manière qu'elles reposent avec un montant de serrage orienté vers le bas (4c) sur le panneau ou la vitre (2) et que la réglette de raccordement (13) est placée avec la platine de circuits imprimés (16), la masse de scellement (17) et la décharge de tension (19) sur le montant de base (8a) du profilé de base (3a) dans une rainure longitudinale située à l'extérieur (3d) avec plusieurs ouvertures de raccord allongées (3e) orientées vers le panneau ou la vitre (2) de telle manière que la réglette de raccordement (13) pénètre par les ouvertures de raccord (3e) sur le montant de base (8a) en direction du panneau ou de la vitre (2) à maintenir pour l'emboîtement avec la piste conductive multipolaire en feuille extrêmement flexible en forme de bande (15) sur le panneau ou la vitre (2).

7. Dispositif de serrage selon la revendicaion 6, **caractérisé en ce que** plusieurs ouvertures de raccord allongées (3e) pour la réglette de raccordement (13) sont réparties sur la longueur du montant de base (8a) du profilé de base (3a) de telle manière que la réglette de raccordement (13) peut être montée sur le profilé de base (3a) tout à fait selon le besoin à n'importe quel endroit souhaité.

8. Dispositif de serrage selon l'une des revendications 1 à 7, **caractérisé en ce que** la réglette de raccordement (13) et la piste conductive en feuille (15) sont configurées au moins bipolaires ou multipolaires.
